# EUROPEAN PATENT SPECIFICATION

(11) **EP 2 359 569 B1**
(45) Date of publication and mention of the grant of the patent: **22.04.2015**
(21) Application number: 09752115.7
(22) Date of filing: 02.11.2009
(51) Int. Cl.: H04L 29/06

(54) **ENCODER AND METHOD FOR GENERATING A STREAM OF DATA**
CODIERER UND VERFAHREN ZUM ERZEUGEN EINES DATENSTROMS
CODEUR ET PROCÉDÉ DE GÉNÉRATION D'UN FLUX DE DONNÉES

(30) Priority: 12.11.2008 US 113663 P; 08.05.2009 US 437844
(43) Date of publication of application: 24.08.2011
(73) Proprietor: Fraunhofer-Gesellschaft zur Förderung der angewandten Forschung e.V., 80686 München (DE)
(72) Inventor: FUCHS, Harald, 91341 Roettenbach (DE); DOEHLA, Stefan, 91052 Erlangen (DE); JENNEHAG, Ulf, 85353 Sundsvall (SE); THOMA, Herbert, 91058 Erlangen (DE); FAERBER, Nikolaus, 91052 Erlangen (DE)
(74) Representative: Zimmermann, Tankred Klaus
(86) International application number: PCT/EP2009/007840
(87) International publication number: WO 2010/054766

(56) References cited:
- US-A1- 2006 031 558
- US-A1- 2007 098 079
- US-A1- 2007 248 165

## Description

### BACKGROUND OF THE INVENTION

### 1. Technical Field of the Invention

Embodiments of the invention relate to the field of generating streams of data including a plurality of encoded data blocks, wherein such kind of streams are transmitted to a receiver and decoded for presentation of the data within the stream. More particularly, and not by way of any limitation, the invention is related to the field of media transmission, reception and playback, and embodiments of the invention concern a fast tune-in into a stream transmission over IP networks using a second stream for a tune-in.

### 2. Description of the Related Art

In the field of media transmission over an IP network (for example IPTV systems) video data is transmitted in encoded and compressed form, and popular video compression standards, such as MPEG-2 and JVT/H.264/MPEG AVC, use intracoding and inter-coding. For proper decoding a decoder decodes a compressed video sequence beginning with an intracoded picture (e.g. an I-picture or I-frame) and then continues to decode the subsequent inter-coded pictures (e.g. the P-pictures or P-frames and/or the B-pictures or B-frames). A group of pictures (GOP) may include an I-picture and several subsequent P-pictures and/or B-pictures, wherein I-pictures require more bits to code than P-pictures or B-pictures for the same quality of the video. Upon receipt of the video stream on a particular channel, for example after changing to this channel or after turning on the receiver, decoding has to wait until the first I-picture is received. To minimize the delay in the coding of the video stream I-pictures are sent frequently, i.e. are included within the video stream at a fixed distance, for example every 0.5 seconds.

One problem of current IPTV systems is the so-called tune-in time into streams that are distributed over multicast IP. The delay between the initialization of tuning into a channel and rendering the content of this channel is due to several effects of which client pre-buffering time and acquisition time for random access points within the stream to be switched to are the dominant ones. Both effects are direct implications of the design of modern video codec schemes. In differential video coding schemes, like MPEG-2 video or MPEG-4 AVC/H.264, only a few pictures of a stream are self-contained, e.g. the above-mentioned I-pictures. These pictures include all information that is necessary to decode the complete picture. Most other pictures are differentially coded and depend on one or more previously transmitted and decoded pictures, e.g. the above-mentioned P-pictures or B-pictures. In other words, the P-pictures or B-pictures do not include all information that is necessary to decode a complete picture, rather additional information from preceding or following pictures is required.

To obtain the best coding efficiency at a given bit rate, the number of I-pictures should be low. On the other hand, the I-pictures serve as random access points (RAP) to the stream where decoding can be started. Hence, there is a delay when tuning into a new stream, since the client (receiver) has to wait for a random access point within the stream to arrive, before it can start decoding and displaying video.

In differential coding schemes, the encoded video bit rate is not necessarily constant but rather depends on the complexity of the video scene. Within a video stream, the variation in coded picture size can be large, for example the I-pictures can be many times as large as differentially encoded pictures, the P-pictures and B-pictures. Upon transmitting such a bit stream over a channel with constant channel bit rate, the client needs to pre-buffer incoming picture data so that the video can be played with the same rate as it was sampled. This buffer needs to be large enough to avoid buffer overflow and shall only be emptied on reaching a certain buffer fullness for avoiding buffer underrun during playout.

Whenever the buffer cannot be filled instantly to the point where the client can start emptying it, delay occurs before rendering can be started.

This functionality is disadvantageous as the receiver which begins receiving a program on a specific channel, for example following a channel change or turning on the receiver must wait until the random access point, for example an I-picture is received, so that decoding can start. Thus, the distance of random access points within the main stream is one of the main causes for the tune-in delay.

One approach to reduce such delay in a multicast linear TV scenario is to send a second stream in parallel to the main stream, wherein the second stream has a higher frequency of random access points. This second stream is for example called the "tune-in stream" or the "side stream".

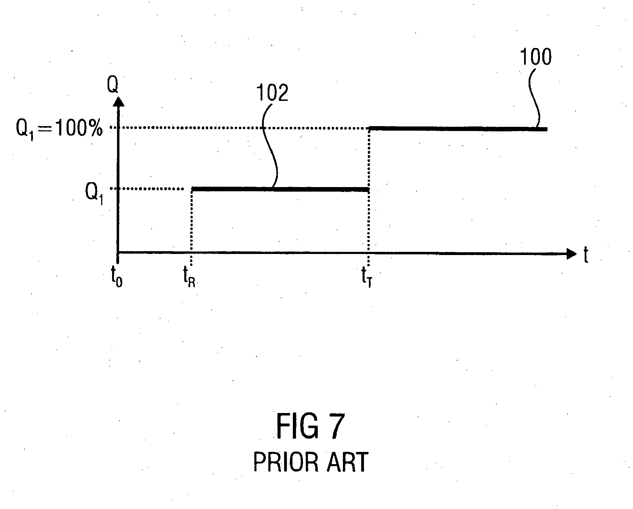

Fig. 7 illustrates tuning into a main stream using a secondary or tune-in stream. Fig. 7 illustrates along the X-axis the time and along the Y-axis the quality level of the respective streams. In Fig. 7, the full quality Qₛ of the main stream 100 is 100% and the side stream or tune-in stream 102 has a lower quality Qᵢ, which is an intermediate quality level, which is lower than the quality level of the main stream 100. When the user initiates a channel change at time to, tuning into the side stream 102 occurs. The side stream comprises more frequent random access points so that the initial start-up delay (tᵣ-t₀) for decoding is reduced by using the tune-in stream 102 having more frequent I-pictures. A decoder within a receiver will obtain a first I-picture from the tune-in stream 102 for the new channel earlier than the first I-picture of the main stream 100. However, as mentioned above, the quality of the tune-in stream 102 is lower than the quality of the main stream, e.g. the pictures are encoded at different quality levels, which is necessary to limit the additional bit rate that is necessary for the tune-in stream as same comprises more I-pictures which are many times larger than the other pictures. Therefore, the tune-in stream 102 is encoded at a lower intermediate quality level Qᵢ, for example, using a lower image resolution, for example, only a quarter resolution when compared to the full resolution of the main stream.

During the transition period (t_{T}-t_{R}) starting at t_{R}, the receiver or client decodes the pictures derived from the tune-in stream 102 until a full resolution I-picture arrives on the main stream at time t_{T}. Once this I-picture arrives, the low resolution stream is stopped and the full quality pictures of the main stream are decoded and rendered.

The main stream and the side stream may be received at the client or receiver using different scenarios, one being the simultaneous transmission of the main stream and the side stream to the receiver. Such an approach is, for example, described in US 2007/0098079 A1. Alternatively, the receiver may obtain only a single stream for decoding from a server which provides both, the main stream and the side stream. Upon initiating a channel change or upon turning on the receiver, a respective request for tuning into a specific channel is forwarded to the server which then provides information on the basis of the side stream or tune-in stream until high-quality information, namely the first I-picture, of the main stream becomes available. Such an approach is for example described in US 2007/0248165 A1.

As mentioned above, the tune-in stream 102 is encoded with a substantially lower bit rate which results in lower video quality than the main stream. This may be accomplished by a reduced image resolution or more aggressive lossy coding parameters, for example a higher quantization is used during encoding of the side stream.

While this approach of providing the lower quality side stream is advantageous for reducing the tune-in delay as discussed above with regard to Fig. 7, the information presented to the viewer of a tune-in stream is of low-quality during a short time period, namely the transition period. In conventional examples, this transition period may range between 1 and 5 seconds. However, at the end of the transition period, namely at point t_{T} the presentation is switched to the full quality main stream and a visible difference between the tune-in stream and the main stream may be quite severe. For example, when looking at a static scene suddenly appearing details due to the switching from the low-quality tune-in stream to the high-quality main stream will be easily noticeable. This effect may lead to a bad user experience that will potentially reduce the subjective positive effect of the faster tune-in.

Therefore, a need exists to provide an approach avoiding visible artifacts when switching into a main stream.

### SUMMARY OF THE INVENTION

One embodiment of the invention provides a method for generating a stream of data comprising a plurality of encoded data blocks, the plurality of encoded data blocks comprises a plurality of self-contained blocks including all information for decoding the block and a plurality of blocks including only partial information for decoding, wherein a distance of self-contained blocks in the stream of data is dependent on the content encoded in the stream, wherein the stream is a main stream. Tuning into the main stream is effected via a secondary stream comprising at least a subset of the data blocks of the main stream encoded at a quality different from a quality of the data blocks of the main stream, wherein the self-contained blocks of the main stream are inserted at positions within the main stream where differences in the quality of the data encoded in the main and secondary streams are less detectable.

Another embodiment of the invention provides an encoder for generating a stream of data comprising a plurality of encoded data blocks, the plurality of encoded data blocks comprising a plurality of self-contained blocks, including all information for decoding the block and a plurality of blocks including only partial information for decoding, wherein the encoder is configured to vary a distance of self-contained blocks in the stream dependent on the content encoded in the stream, wherein the stream is a main stream. Tuning into the main stream is effected via a secondary stream comprising at least a subset of the data blocks of the main stream encoded at a quality different from a quality of the data blocks of the main stream, wherein the self-contained blocks of the main stream are inserted at positions within the main stream where differences in the quality of the data encoded in the main and secondary streams are less detectable.

Yet another embodiment of the invention provides a method for tuning into a main stream, wherein a main stream and a secondary stream are provided. The main stream comprises a plurality of encoded data blocks, the plurality of encoded data blocks comprising a plurality of self-contained blocks including all information for decoding the block and a plurality of blocks including only partial information for decoding. The secondary stream comprises at least a subset of the source data of the main stream encoded at a different, typically lower, quality than the data blocks of the main stream, wherein the self-contained blocks in the main stream are inserted at positions where differences in the quality data encoded in the main and secondary streams are subjectively less detectable. Upon receiving a tune-in request tuning into the secondary stream and the main stream occurs, and the secondary stream is decoded until a self-contained block arrives on the main stream or a required main stream decoder buffer-fill level is reached. Upon arrival of the self-contained block on the main stream or reaching the required main stream decoder buffer-fill level, decoding of the secondary stream is stopped and decoding of the main stream starts.

Further embodiments of the invention provide a decoder for receiving encoded data and for providing decoded output data. The decoder comprises an input for receiving a main stream and a secondary stream. The main stream comprises a plurality of encoded data blocks, the plurality of encoded data blocks comprising a plurality of self-contained blocks including all information for decoding the block and a plurality of blocks including only partial information for decoding. The secondary stream comprises at least a subset of the data blocks of the main stream encoded at a lower quality than the data blocks of the main stream, wherein the self-contained blocks in the main stream are inserted at positions where differences in the quality data encoded in the main and secondary streams are less detectable. Further, the decoder comprises a control input for receiving a tune-in request signal and a decoding portion coupled to the input and to the control input for producing decoded output data. The decoding portion is adapted to tune into the secondary stream upon receipt of a tune-in request, to decode the secondary stream until a self-contained block arrives on the main stream or a required main stream decoder buffer-fill level is reached, and to stop decoding of the secondary stream and to start decoding of the main stream upon arrival of the self-contained block on the main stream or reaching the required main stream decoder buffer-fill level.

Embodiments of the invention concern encoders, streaming servers, network components and clients or receivers for multimedia distribution systems for using a tune-in stream for fast channel change wherein switching from the tune-in stream to the main stream is subjectively hidden through content-adaptive coding.

### BRIEF DESCRIPTION OF THE DRAWINGS

The embodiments of the invention will be described in the following with reference to the accompanying drawings, wherein:
- Fig. 1: is a flow-diagram of a method for generating a data stream according to an embodiment of the invention;
- Fig. 2a: is a block diagram of an encoder in accordance with an embodiment of the invention;
- Fig. 2b: is a block diagram of the encoder of Fig. 2a providing the main and side streams separately, i.e. the encoder does not comprise a multiplexer;
- Fig. 3: is a flow-diagram of a method for tuning into a main stream in accordance with an embodiment of the invention;
- Fig. 4a: is a block diagram of a decoder in accordance with an embodiment of the invention;
- Fig. 4b: is a block diagram of the decoder of Fig. 4a receiving the main and side streams separately, i.e. the decoder does not comprise a demultiplexer;
- Fig. 5a: is a block diagram of a decoder in accordance with another embodiment of the invention;
- Fig. 5b: is a block diagram of the decoder of Fig. 5a receiving the main and side streams separately, i.e. the decoder does not comprise a demultiplexer;
- Fig. 6: illustrates tuning into a main stream using a plurality of tune-in streams; and
- Fig. 7: illustrates the conventional approach of tuning into a main stream using a tune-in stream.

### DESCRIPTION OF EMBODDMENTS OF THE INVENTION

In the following, embodiments of the invention will be described. One embodiment of the invention concerns an approach for generating a stream of data, for example a video stream or an audio stream wherein the stream of data comprises a plurality of encoded data blocks which comprise a plurality of self-contained blocks including all information for decoding the block and a plurality of blocks including only partial information for decoding. In accordance with embodiments of the invention, the stream of data may be a video stream being encoded using intra- and intercoding. The encoded stream may comprise I-pictures as random access points and P-pictures and/or B-pictures. Within the encoded data stream the distance of self-contained blocks, for example the I-pictures, is varied dependent on the content of the stream.

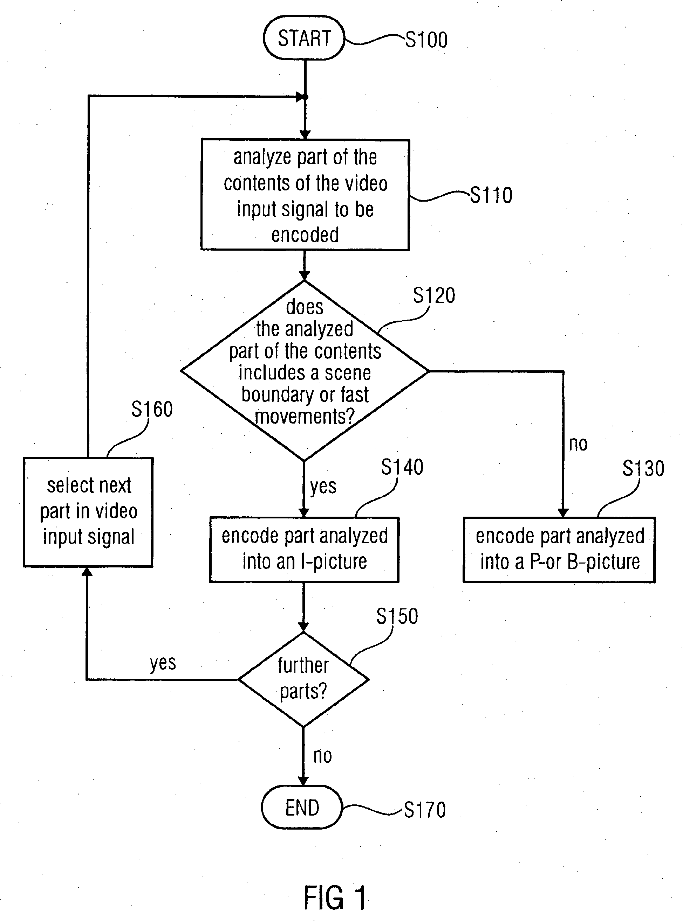

Fig. 1 is a flow-diagram illustrating a method for generating a stream of data in accordance with an embodiment of the invention for generating a video stream. At step S100 the method starts and a video input signal is provided. This video input signal comprises a plurality of parts, for example a picture defining a picture within the video stream. At step S110, a part of the video information received, and the content of the video input signal to be encoded is analyzed. In the embodiment described with regard to Fig. 1, it is determined at step S120 whether the analyzed part of the content is associated with a specific scenario, like a scene boundary or a fast camera movement within the scene. In case no such specific situation is present in the analyzed part of the content, the method proceeds to step S130, where the analyzed part is encoded into a P-picture or a B-picture. On the other hand, in case the above discussed situation is recognized in the content, the method proceeds to step S140 where the analyzed part is encoded into an I-picture. At step S150 it is checked as to whether additional parts to be analyzed are present and in case this is true, the method proceeds to step S160 where the next part to be analyzed in the video input signal is selected and the method then returns to step S110. Otherwise, the methods ends at step S170, i.e., the video input signal is now encoded and is present in the form of a sequence of I-pictures and P-pictures and/or B-pictures.

The above described approach for determining a position of I-pictures within a video stream results in the placement of an I-picture within the encoded video stream dependent on the content so that the actual distance between consecutive I-pictures varies. Thus, I-pictures are inserted into the video stream not at a fixed distance, i.e. the static GOP length of for example one second or five seconds - as used in conventional approaches - does no longer exist. Rather, the distance of consecutive I-pictures is varied. In accordance with embodiments of the invention the distance may be varied within a certain time window, e.g. a time window having a maximum distance of five seconds and a minimum distance of one second. This solution is advantageous as it may increase the bit rate efficiency in the video stream, because I-pictures for random access points are placed at positions within the stream where the bit demand is higher anyway, even for P-pictures, for example at scene cuts or during high camera motion, where motion prediction is requiring high information in the P-pictures.

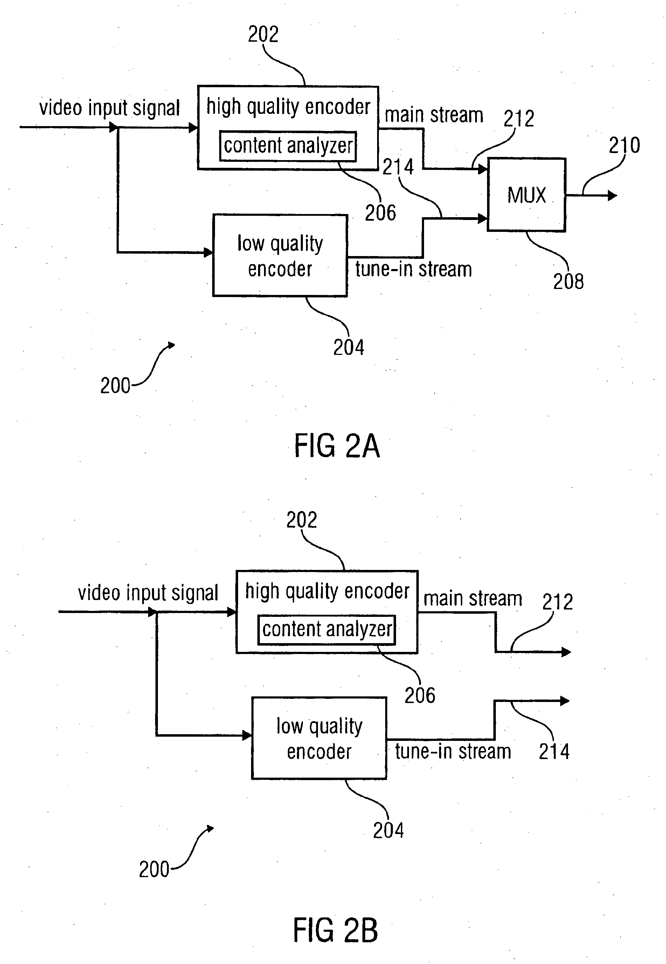

Fig. 2 is a block diagram of an encoder in accordance with an embodiment of the invention. Fig. 2 shows the encoder 200 which comprises a main encoder 202 and a side encoder 204. The main encoder 202 comprises a content analyzer 206. The main encoder 202 receives a video input signal and operates in accordance with the method described above for generating the main stream at its output. In addition, in further embodiments the encoder 200 may also include the additional side encoder 204 which generates, on the basis of the video input signal, a so-called tune-in stream corresponding to the main stream, being however encoded with a higher number of I-pictures, typically at a lower quality to be able to achieve a lower bitrate of the side stream compared to the main stream. In addition, the encoder 200, in an embodiment, may comprise a multiplexer 208 receiving the main stream from the main encoder 202 and the tune-in stream from the side encoder 204 and providing either a combined output stream 210 (see Fig. 2a) or separate main 212 and tune-in 214 streams (see Fig. 2b) which is/are to be broadcast to clients for decoding and display.

In accordance with an embodiment of the invention using the encoder 200 as shown in Fig. 2 which comprises the two encoders 202 and 204, the main stream is generated for a channel in a multi-channel transmission system, and in such a system tuning into the main stream is effected via the secondary stream, the tune-in stream or side stream also generated by encoder 200. As discussed above, the main stream comprises a plurality of I-pictures which are not provided at a fixed distance, but the distance of consecutive I-pictures varies within a certain time window. In encoder 202 the video content defined by the video input signal is analyzed by means of the content analyzer 206 during encoding and I-pictures are inserted at positions where visual differences in resolution or visual differences in image quality in general are subjectively less detectable, for example at a scene boundary or during fast camera movements during a scene.

Generating the main stream in this manner is advantageous as upon tuning into the main stream either upon turning on a receiver or switching from another channel a smooth transmission from the tune-in stream to the main stream is achieved, which may be completely undetectable by a viewer. Further, this solution may increase the bit rate efficiency in the main stream, because I-pictures for random access points are placed at points in the stream where the bit demand is higher anyway, even for P-pictures. In addition, bits for additional I-pictures at a fixed distance may be saved without losing accessibility to the channel as accessibility is ensured by providing the tune-in stream that may have the I-pictures at a fixed distance and at a higher rate, i.e. the number of I-pictures, as discussed above, is higher than the number of I-pictures in the main stream. This may result in the necessity to encode the tune-in stream with a lower quality to meet the bitrate requirements for transmitting the information. An additional advantage is that the above described approach is a pure head-end solution which preferably exists inside encoding device 202 and requires no additional network devices or the like. Further, it is advantageous that effectively no additional client device complexity is added. All the client has to do is to monitor the main stream actively for the first I-picture, rather than counting a fixed number of pictures after tune-in in case of static transition periods. Alternatively, the tune-in stream may include additional signaling about the next I-picture in the main stream indicating when the next I-picture occurs in the main stream. This enables the client to switch to the main stream without monitoring same.

Placing the I-pictures within the main stream dependent on the content is advantageous. However, in a situation of very long static scenes, it may be that any predefined, maximum allowed I-picture distance (that is set to not exceed a maximum transition period length) will be exceeded, so that it will be necessary to place an I-picture within the static sequence. In this situation, the switching from the low-quality tune-in stream to the high-quality main stream would potentially be visible. For such situations, i.e., a situation where an I-picture must be placed irrespective of the content, embodiments of the invention teach to modify the tune-in stream by gradually enhancing the quality of the tune-in stream during the transition period, for example by lowering the quantization parameters step by step up to the I-picture boundary of the main stream. The quantization parameter is one of the main parameters that controls the video quality during the encoding process. A lower quantization parameter corresponds to a more fine grain quantization of the encoded data coefficients and thus less visible encoding distortions like blocking artifacts.

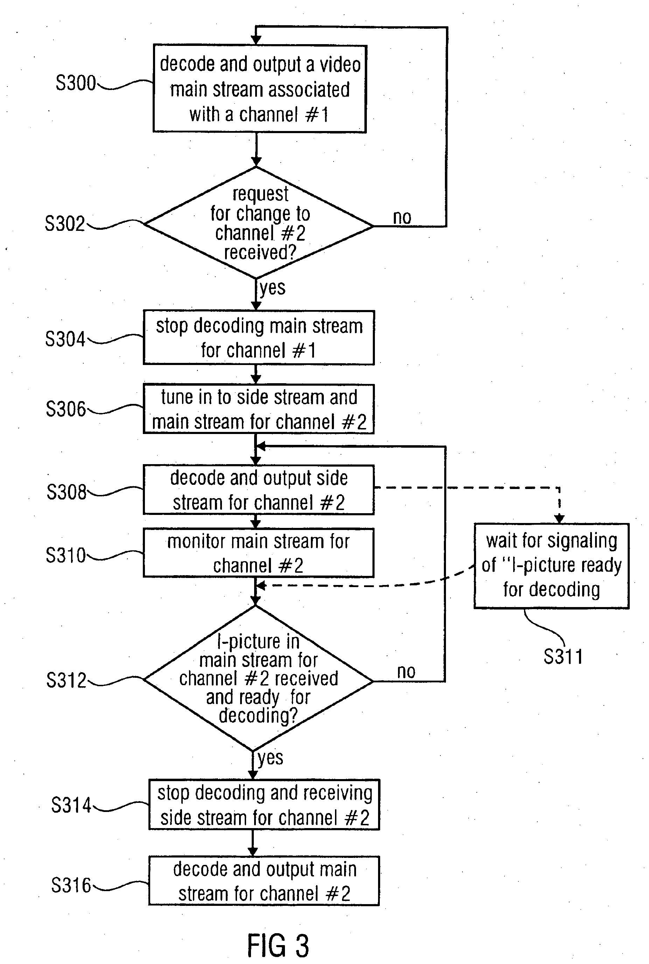

Fig. 3 is a flow-diagram of a method for tuning into a video main stream in accordance with an embodiment of the invention. Fig. 3 starts from a situation where at a receiver a video mainstream associated with a first channel is presently received, decoded and output for display, as is shown at step S300. At step S302 it is monitored whether a channel change request is obtained, for example a request to change to a second channel. As long as no such request is received the video main stream associated with the first channel is continued to be decoded and output for display. However, in case a channel change request is received at step S302 the method proceeds to step S304. At step S304 decoding of the main stream for the first channel is stopped and the receiver tunes into the tune-in stream or side stream and into the main stream for the second channel as is indicated by step S306. After tuning into the side stream for the second channel starting with the receipt of a first I-picture in the side stream decoding and outputting the side stream for the second channel starts at step S308. At step S310 the main stream for the second channel is monitored to determine in step S312 whether an I-picture in the main stream for the second channel was received or not. As long as no I-picture in a main stream was received the method continues to decode and output information from the side stream and continues to monitor the main stream for the I-picture. As soon as the first I-picture for the main stream for the second channel is received and is ready for decoding the method proceeds to step S314 where receiving, decoding and outputting the side stream for the second channel is stopped. At step S316 decoding and outputting the main stream for the second channel is started effectively completing the channel change process.

As far as Fig. 3 is concerned, same was described with regard to a situation where a receiver is already operating and decoding and outputting information regarding a first channel (see steps S300 to S304). However, in accordance with other embodiments, this approach also works in situations where a receiver at the client's side is turned on and starts decoding a video stream. In a similar manner as described in steps S306 to S316 the receiver first of all tunes into the channel selected at start-up of the receiver and decodes and outputs the side stream until an I-picture in the main stream arrives.

Since the I-picture in the main stream is placed within the main stream at a position where differences in image quality are less detectable, the transition from the side stream to the main stream upon receipt of the I-picture in the main stream is less detectable and may be completely undetectable by the viewers. Thus, switching from the low-quality side stream to the high-quality main stream is subjectively hidden due to the fact that the I-pictures in the main stream were placed in positions determined on the basis of the content of the main stream.

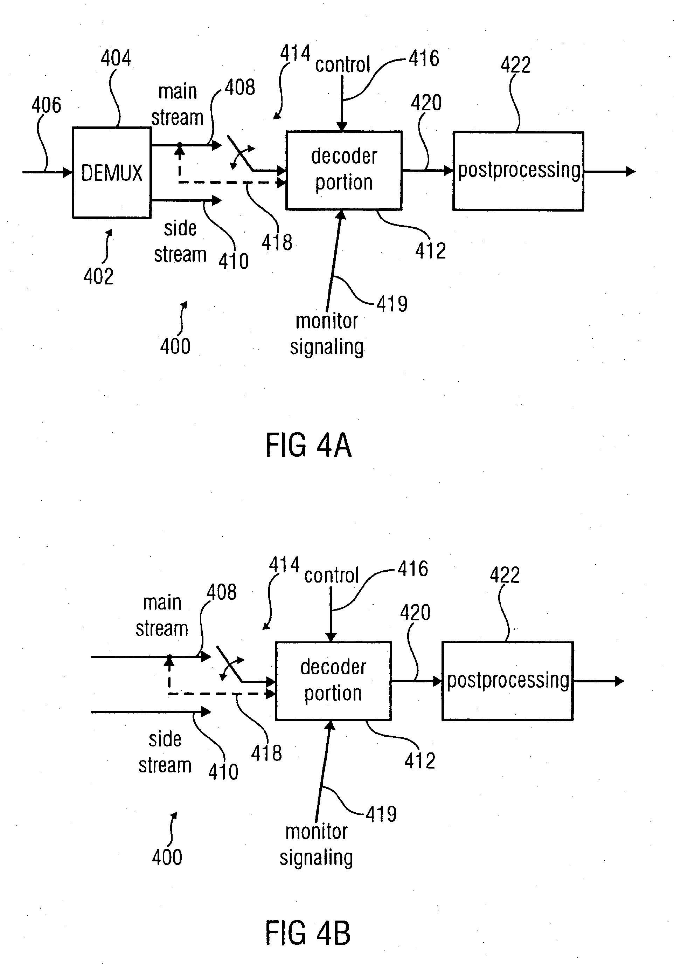

Fig. 4 shows a block diagram of a decoder 400 as it may be used in accordance with an embodiment of the invention. The decoder 400 comprises an input section 402. The input section 402 receives either the main stream 408 and the side stream 410 (see Fig. 4b) or a combined input stream 406. In case of the combined input stream (see Fig. 4a), the input section comprises a demultiplexer 204 receiving at its input a combined input stream 406 which, by means of the demultiplexer 404 is split into the main stream 408 and the side stream 410.

Further, the decoder 400 comprises a decoder portion 412. The decoder portion 412 comprises a switching element 414 for selectively applying to an input of the decoder portion either the main stream 408 or the side stream 410. Further, the decoder portion has a control input 416 for receiving control signals, for example the above described channel change request signal. Further, the decoder portion 412 monitors the main stream as is schematically illustrated by the dashed line 418.

The decoder 400 operates in a manner as described above with regard to Fig. 3, i.e. the decoder portion 412 decodes the main stream for a specific channel as long as no control signal at the input 416 indicating a channel change request is received. Upon receipt of a channel change signal at control input 416 the decoder portion tunes into the side stream by switching the switching element 414 to provide the side stream 410 to the decoder portion which then decodes the side stream once the first I-picture within the side stream is detected and ready for decoding. The decoder portion 412 then outputs the decoded signal 420. At the same time, the decoder portion 412 monitors, via line 418 the main stream 408 and as soon as a first I-picture is detected in the main stream and is ready for decoding it is switched such that the main stream is provided to the decoder portion 412 and the main stream is decoded and output at 420.

In many cases switching from the tune-in stream to the main stream in a manner as described above with regard to Fig. 4 is time critical to avoid any distortions. Therefore, often two independent decoder chains for tune-in stream and the main stream are favored, to be able to start decoding the main stream slightly in advance so that the switching can be done in the uncompressed domain. However, such an approach is disadvantageous as the use of two decoders increases the client complexity. Therefore, an additional need exists to provide a single decoder which will save implementation complexity and allows re-use of already existing decoder chips. Therefore, in accordance with an embodiment of the invention the switching point in the tune-in stream and/or main stream is signaled to enable the decoder to switch over. Different methods for signaling can be implemented, dependent on the transport layer and stream types in use. For RTP streams, for example the RTP header extensions can be used or for example the RTCP sender reports. For MPEG-2 Transport Streams e.g. the Synchronous Ancillary Data (SAD) mechanism or e.g. a separate stream with another PID could be used. For AVC video streams SEI messages in the video stream may be used.

Using only a single decoding element and signaling to the decoding element when the switching will occur is advantageous as, first of all, only one decoder is necessary in the client device thereby reducing its complexity. Also, this approach works fine for time-shifted (delayed) tune-in streams. In addition, there is no need for the client to implicitly calculate or estimate the correct switch-over point. The client only needs to read the signaling messages from the streams. The encoder sends a message that signals the point in time, when the client is allowed to switch to the main stream and start decoding the first main stream data. This signal is sent along with the stream data, e.g. embedded in the tune-in stream data (e.g. as an RTP header extension) or e.g. as a separate signal flow (e.g. as an RTCP message).

The client device is monitoring this signaling, and on arrival of a message the client acts according to this message, i.e. stops decoding of the tune-in stream data and starts decoding the main stream data.

This has the advantage that the client can avoid parsing of stream data (e.g. parsing header information of the encoded picture data for a picture identifier, this identifier being different for different encoding schemes like H.264 or MPEG-2), and only needs to read signaling messages. Another advantage is that the client not only gets the information about the arrival of the I-picture, but also when the I-picture is ready for decoding (e.g. when the input buffer for the main stream is filled to a level that avoids buffer-underrun and overflow in the subsequent stream decoding).

Referring to Fig.3, the client does not monitor the main stream for an I-picture at step S310, but monitors the signaling in step S311 to receive the information about arrival (and complete reception of the picture data) and the "ready for decoding" status.

Referring to Fig.4, the decoder portion 412 does not monitor the main stream via the dotted line 418, but the signaling via the dotted line 419 to get the above described information.

An alternative signaling aspect is now described. As mentioned above, the client needs to wait for the first I-picture data of the main stream before being able to decode the main stream. Any data of the main stream that is received before the first I-picture data cannot be used and has to be deleted. It is advantageous to avoid the reception of such data to minimize the time when both streams (tune-in stream and main stream) need to be received from the client to save bandwidth on the client connection to the network (e.g. a DSL line) for other applications that may also make use of the bandwidth (that is usually constraint on such e.g. DSL line, compared to the core network bandwidth).

Thus, it is advantageous to signal, when the next I-picture (i.e. the first packets/bits of the picture) can be received by the client. This information enables the client to join the main stream just before the I-picture data will arrive and avoids the client to join the main stream ahead of time (e.g. in parallel to the tune-in stream, as described in Fig. 3 step S306).

Such signaling can be done similar to the above describe "I-picture ready for decoding" message, e.g. embedded in the tune-in stream or as a separate data flow. Further it may be useful to send a number of messages, e.g. "I-picture starts in 3 seconds", "I-picture starts in 2 seconds", "I-picture starts in 1 second", for error robustness and to enable the client to cope with potential network jitter (i.e. different network delays between transmission of the signaling and the stream data).

In accordance with further embodiments the decoder 400 may comprise a post-processing unit 422 which may further reduce the subjective difference between the tune-in stream and the main stream when switching from the tune-in stream to the main stream. Preferably, the post-processing unit 422 manipulates the main stream decoding. To be more specific, a filtering of the decoded pictures from the main stream may be applied, starting from the first picture of the main stream over a specific period of time, for example 0.5 seconds. This filtering may result in a blurring of the picture and in embodiments the filter coefficients may be modified over the above mentioned period of time, thereby reducing the blurring effect or filtering effect from picture to picture, thereby gradually changing from the low-quality of the tune-in stream to the high-quality of the main stream. Alternatively, post-processing may be achieved by decoding the first picture after the switch only with a subset of coefficients which is known as reduced resolution update in the H.263 standard. Following the first picture for each subsequent picture an increased number of coefficients is used until the full number of coefficients is applied and a full quality decoding of the main stream is achieved. This approach also leads to reduced image details in the first pictures after the switch and thereby contributes to the subjective hiding of the switch from the low-quality stream to the high-quality stream.

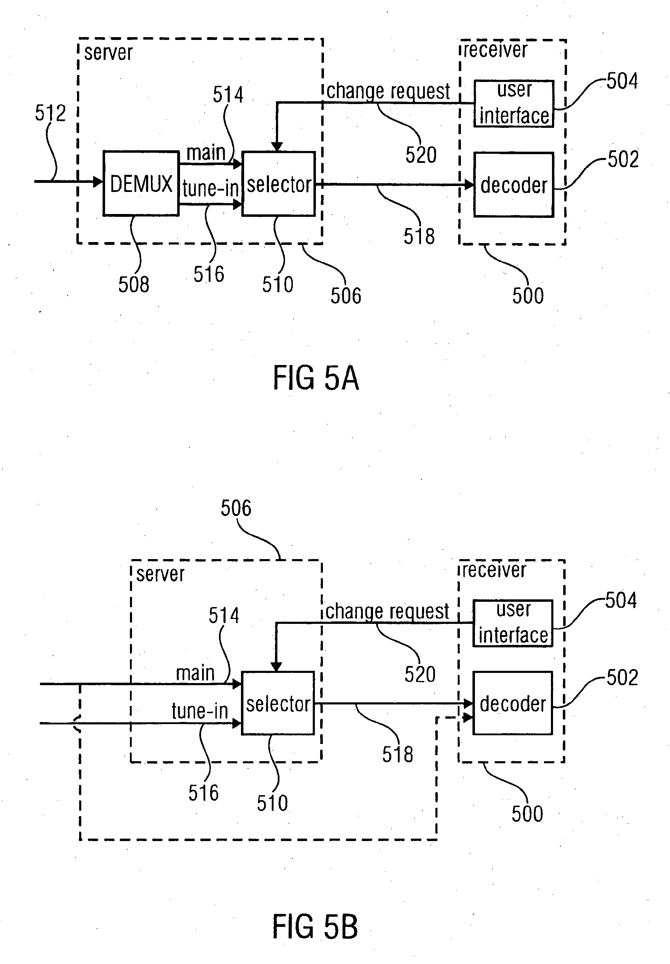

The embodiments described so far operated on the basis of receivers which obtained both the main stream and the side stream at the same time, however, the invention is not limited to such an environment. Fig. 5 is a block diagram of a receiver/server system which can also be used in accordance with embodiments of the invention. The system shown in Fig. 5 comprises the receiver 500 which includes the decoder 502 and a user interface 504. In addition, a server 506 is shown. The server 506 comprises an optional demultiplexer 508 (see Fig. 5a) and a selector 510. The server 506 receives at the input of the demultiplexer 508 a combined video stream 512 for one channel and by means of the demultiplexer 508 combined input stream 512 is separated into the main stream 514 and the tune-in stream or side-stream 516. Alternatively, the main stream 514 and the tune-in stream or side-stream 516 may be received separately so that no demultiplexer is needed (see Fig. 5b). These streams are input into the selector 510 which outputs one of the selected streams to the decoder as is shown at 518. Further, the selector 510 is connected to the user interface 504 of the receiver 500 as is shown at 520. Via line 520 the selector 510 may receive for the user interface 504 a change request signal. The functionality of the system shown in Fig. 5 is similar to the one described above. To be more specific, as long as no channel change request is received at the selector the main stream for a specific channel is provided via the selector to the decoder, decoded at output. Upon receiving a channel change request via line 520 the selector tunes into the tune-in stream 516 and supplies the tune-in stream to the decoder until at the main stream an I-picture is obtained. Once this I-picture is present switching from the low-quality tune-in stream to the high-quality main stream is done as described above. The main stream 514 may also be provided directly to the decoder (see the dashed line in Fig. 5), i.e. not via the server.

In accordance with another aspect of the invention simple distortions upon switching from a tune-in stream to a main stream may be avoided by providing one or more additional tune-in streams which are encoded at different quality levels between the quality level of the main stream and the quality level of the first tune-in stream. This approach might be combined with the above-mentioned and described approach of introducing the I-pictures at the varying dis-tances, however, the approach of using a plurality of tune-streams might also be used with conventional main stream encoding approaches, i.e. with conventional main streams having their I-pictures at fixed distances, i.e. positioned irrespective of the content.

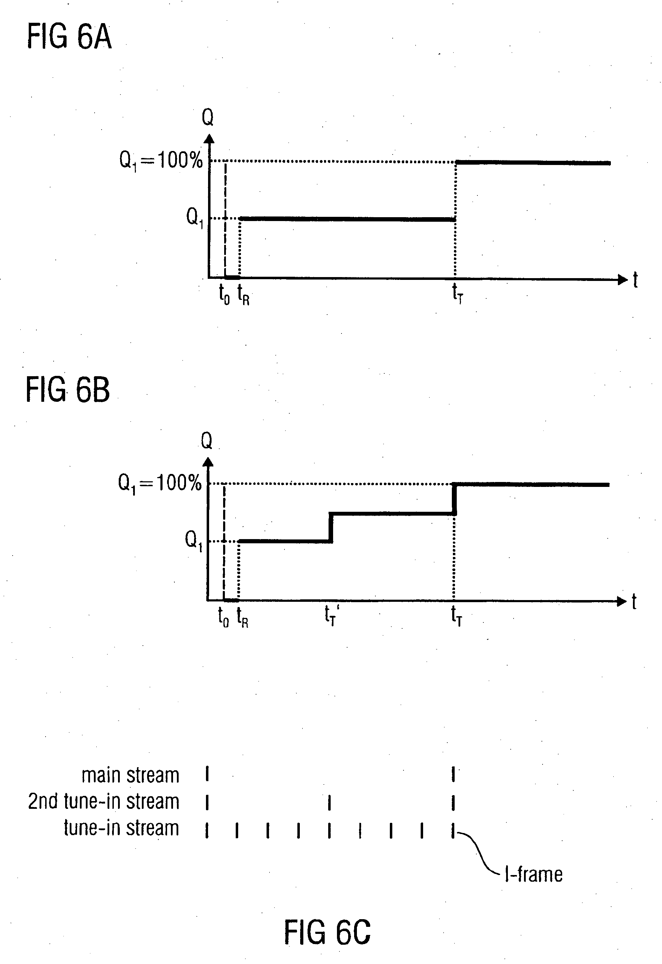

Fig. 6 illustrates an embodiment of the invention using one main stream and two tune-in streams. Fig. 6(a) corresponds to Fig. 7 and shows a situation where only a single main stream and a single tune-in stream is provided. Fig. 6(b) shows the change of quality using two tune-in streams and Fig. 6(c) is a schematic representation of the respective streams, wherein the vertical lines illustrate the position of an I-picture in the respective streams. As can be seen from Fig. 6(c), the number of I-pictures within the main stream is the lowest, and these I-pictures are placed at a long distance from each other. The I-pictures might either be placed in the main stream dependent on its content or at fixed distances. The first tune-in stream has the highest number of I-pictures, whereas the second tune-in stream has a number of I-pictures, which is between the number of I-pictures of the main stream and the tune-in stream.

The second tune-in stream may be used to avoid any unde-sired jump in the presented image quality during tune-in. The second tune-in stream may be encoded in a way that - during a part of a transition period - the quality is gradually increased from the tune-in stream quality Qᵢ to the full quality Q_{f} of the main stream (100%), as is shown in Fig. 6(b). To be able to achieve Q_{f} at the end of the transition period, the second tune-in stream is using the full resolution of the main stream. To enable a smooth transition and to avoid excessive bit rate overhead, the second tune-in stream may use a longer GOP period than the tune-in stream.

A tune-in process may look like it is shown in Fig. 6(b). After initializing the tune-in stream at time to, the client device first of all has to wait for the next I-picture to arrive which is the I-picture in the tune-in stream, which arrives at t_{R}. During the period from t_{R} to t_{T}', the tune-in stream is decoded and presented. At time t_{T}' an I-picture of the second tune-in stream arrived and is ready for decoding. During the time period from t_{T}' to t_{T}, the second tune-in stream is presented, and at time t_{T} the transition period ends and the client switches to the main stream.

In addition, embodiments allow only the second tune-in stream to be encoded with an adaptive GOP length and the tune-in stream and the main streams may have a fixed GOP length. In other words, in such an embodiment the main stream and the tune-in stream are conventionally encoded and only the second tune-in stream is encoded in such a manner that the I-pictures are placed within the second tune-in stream dependent on the content.

It is further noted that the invention is not limited to the use of only two tune-in streams, rather it is possible to have N tune-in streams instead of two, thereby enabling a finer granularity and smoothness upon increasing the quality.

Embodiments as described above included tune-in streams or side streams which included both, I-pictures and P-pictures or B-pictures. However, the invention is not limited to such tune-in streams. In alternative embodiments the tune-in streams may consist only of single tune-in pictures, e.g. the side stream may only transmit the random access points or I-pictures. The intermediate pictures are decoded using the data from the main stream, e.g. information from the P-pictures and/or B-pictures of the main stream. The embodiments described above describe two separate streams, the main stream and the tune-in stream. However, the invention is not limited to such embodiments, rather the above methods can also be adapted to scalable video coding (SVC) using for example two layers, an enhancement layer having a longer I-picture distance and a base layer having a shorter I-picture distance. In such a scenario the base layer corresponds to the tune-in stream and is designed like the above-described tune-in stream. However, the above-mentioned use of more than one tune-in stream can also be realized by a scalable video coding approach, for example by applying a three-layer SVC with one base layer and two enhancement layers. Scalable video coding and using this approach for tuning into a main stream upon a channel change are e.g. described in WO 2008 138546 A2 and US 2003/0007562 A1 the disclosures of which are incorporated herewith by reference.

Subjectively hiding the switch from the low-quality stream to the high-quality stream is achieved in the same manner as above, i.e. during switching only the base layer is used for decoding until an I-picture in an enhancement layer is received. Upon receipt of this I-picture in the enhancement layer decoding is done on the basis of the information from the enhancement layer. Further, while embodiments of the invention are described with regard to an internet protocol TV system (IPTV system) it is noted that the invention is not limited to such an environment. Rather, the embodiments described above can be used and applied to any multimedia distribution system, e.g., broadcasting systems. Since embodiments of the invention provide a pure head-end solution, the solution of tune-in streams with an adaptive transition period length may also be applied to any multimedia distribution system.

In accordance with a further embodiment of the invention an additional switching picture for every I-picture may be sent in the main stream or in the tune-in stream or independent from the streams. The switching picture is an alternative encoding of an I-picture at the same sampling instance and it is only used after switching. During normal decoding of the main stream, in the steady state of channel reception the normal I-picture from the main stream is used. The switching picture is encoded in a way that also helps to reduce the visual difference between tune-in and main streams. It is encoded at a quality between the main stream and the tune-in stream. Alternatively, a complete "switching GOP" may be sent instead of a switching picture to control the "quality ramp-up" from the intermediate tune-in quality to the full main stream quality.

Further, it is noted that the embodiments were described in combination with video data, however it is noted that the invention is not limited to the transmission of video data, rather the principles described in the embodiments above can be applied to any kind of data which is to be encoded in a data stream. To be more specific, the above described principles also apply to audio data or other kind of timed multimedia data that uses the principle of differential encoding, utilizing the principle of different types of transmitted data fragments within a data stream, like full information (that enables the client to decode the full presentation of the encoded multimedia data) and delta (or update) information (that contains only differential information that the client can only use for a full presentation of the encoded multimedia data if preceding information was received). Examples of such multimedia data, besides video, are graphics data, vector graphics data, 3D graphics data in general, e.g. wireframe and texture data, or 2D or 3D scene representation data.

It should be understood that depending on the circumstances, the methods of embodiments of the invention may also be implemented in software. Implementation may occur on a digital storage medium, in particular a disc, a DVD or a CD with electronically readable control signals which can interact with a programmable computer system such that the respective method is executed. Generally, the invention thus also consists in a computer program product with a program code stored on a machine-readable carrier for performing the inventive method, when the computer program product runs on a PC and/or a microcontroller. In other words, the invention may thus be realized as a computer program with a program code for performing the method when, the computer program runs on a computer and/or a microcontroller.

It is noted that the above description illustrates the principles of the invention, but it will be appreciated that those skilled in the art will be able to devise various arrangements that, although not explicitly described or shown here, embody the principles of the invention without departing from the spirit or scope of the invention. It will be appreciated by those skilled in the art that the block diagrams presented herein represent conceptual views of illustrative circuitry embodying the principles of the invention. Similarly, it will be appreciated that any flowcharts, flow-diagrams, transmission diagrams and the like represent various processes which may be substantially presented in a computer readable media and so executed by a computer or processor whether or not such a computer or processor is implicitly shown. The functions of the various elements shown in the figures may be provided through the use of dedicated hardware as well as hardware capable of executing software in association with the appropriate software. When provided by a processor, the functions may be provided by a single dedicated processor, by a single shared processor or by a plurality of individual processors, some of which may be shared. Moreover, explicit use of the term "processor" or "controller" should not be construed to refer exclusively to hardware capable of executing software, it may implicitly include, without limitation, a digital signal processor hardware, read-only memory for storing software, random access memory and non-volatile storage.

Embodiments of the invention were described in the context of a multi-channel transmission system in which the main stream and the secondary stream are associated with a channel of a multi-channel transmission system, and a tune-in request indicates a change from a current channel of the multi-channel transmission system to a new channel of the multi-channel transmission system.

However, the invention is not limited to such embodiments. Rather, the invention, in general, is concerned with improving the tune-in characteristics upon tuning into a stream which comprises a main stream and at least a secondary stream as described in detail above, wherein the stream may be a single stream which is provided to a user, e.g. over a network, like the Internet.

The stream containing e.g. a video contents may be provided by a service provider such that a user may tune into the stream at any time. In such a situation, after receiving the tune-in request the stream including both the main and the secondary streams is received by the user, and the secondary stream is decoded until the self-contained block arrives on the main stream and the required main stream decoder buffer-fill level is reached.

In another embodiment of the invention, the stream is obtained by a user on the user's demand, e.g. from a service provider. The stream (e.g. video on demand) is received by the user and when tuning into the stream decoding of the stream starts. Again, decoding of the stream is done on the basis of the secondary stream until the required main stream decoder buffer-fill level is reached. This approach is chosen despite the fact that the stream, due to being obtained on demand, may be provided to the user such that a I-picture is present in the main stream upon tuning into the stream. Nevertheless, decoding will not start immediately, rather, a predefined main stream decoder buffer fill level will be obtained to ensure continuous decoding of the stream even in case of temporal interruptions of the stream (e.g. due to delayed stream packets due to network traffic). However, the amount of data to be buffered for the main stream is quite high. Therefore, also in such a situation the secondary stream is used at the beginning as the amount of information or data to be buffered in the secondary stream decoder is lower than the amount to be buffered in the main stream decoder. Thus, when using the secondary stream decoding will start earlier as the required fill lever for the secondary stream buffer is reached fast. Once the required main stream decoder buffer-fill level is reached decoding of the main stream starts.

In the description of the embodiments of the invention, the self-contained blocks and the non-self-contained blocks of the streams were named as I-pictures and P- or B-pictures, respectively. It is noted, that the term "picture", in general, determines an encoded contents that includes data or information that is necessary to decode the contents of the block. In case of I-pictures all data or information is included that is necessary to decode the complete contents of the block, whereas in case of P- or B-pictures not all information is included that is necessary to decode a complete picture, rather additional information from preceding or following pictures is required. Alternatively, the I-, P- and B-pictures may be named I-, P- and B-frames.

## Claims

1. A method for generating a stream of data comprising a plurality of encoded data blocks, the plurality of encoded data blocks comprising a plurality of self-contained blocks including all information for decoding the block and a plurality of blocks including only partial information for decoding, the method comprising:
varying a distance of self-contained blocks in the stream dependent on the content encoded in the stream,
wherein the stream is a main stream (408), and wherein tuning into the main stream is effected via a secondary stream comprising at least a subset of the data blocks of the main stream encoded at a quality different from a quality of the data blocks of the main stream, and
wherein the self-contained blocks are inserted at positions in the main stream where differences in the quality of the data encoded in the main stream and in the secondary stream are less detectable.

2. The method of claim 1, comprising
analyzing the content of the main stream during encoding the data for the main stream; and
based on the analysis, determining a position of the self-contained blocks in the main stream.

3. The method of claim 1, wherein the self-contained blocks are inserted at a position in the main stream where the content is more dynamic than at another position.

4. The method of claim 3, wherein the data of the main stream represents video content, and wherein the self-contained blocks are inserted at scene boundaries or during fast camera movements during a scene.

5. The method of claim 4, wherein the main stream is encoded using a differential video coding scheme yielding a plurality of I- or IDR-pictures as self-contained blocks and a plurality of P-pictures or B-pictures.

6. The method of claim 4, wherein the content is encoded using a scalable video coding scheme yielding at least one enhancement layer as the main stream and a base layer as the secondary stream, the I-picture distance in the base layer being shorter than the I-picture distance in the enhancement layer.

7. The method of claim 1, wherein the distance of the self-contained blocks in the stream is varied within a predefined time window.

8. The method of claim 1, further comprising:
generating for each self-contained block in the main stream a switching block or for each group of blocks in the main stream a group of switching blocks, a switching block being encoded with a quality between the quality of the data blocks of the main stream and the secondary stream.

9. An encoder (202) for generating a stream of data comprising a plurality of encoded data blocks, the plurality of encoded data blocks comprising a plurality of self-contained blocks including all information for decoding the block and a plurality of blocks including only partial information for decoding,
wherein the encoder is configured to vary a distance of self-contained blocks in the stream dependent on the content encoded in the stream,
wherein the stream is a main stream, and wherein tuning into the main stream is effected via a secondary stream comprising at least a subset of the data blocks of the main stream encoded at a quality different from a quality of the data blocks of the main stream, and
wherein the self-contained blocks are inserted at positions in the main stream where differences in the quality of the data encoded in the main stream and in the secondary stream are less detectable.

10. A method for tuning into a main stream, the method comprising:
providing a main stream generated in accordance with the method of one of claims 1 to 8, and the secondary stream;
upon receiving a tune-in request, tuning into the secondary stream and the main stream;
decoding the secondary stream until a self-contained block arrives on the main stream or until a required main stream decoder buffer-fill level is reached; and
upon arrival of the self-contained block on the main stream or reaching the required main stream decoder buffer-fill level, stopping decoding of the secondary stream and starting decoding of the main stream.

11. The method of claim 10, wherein the main stream and the secondary stream are provided to a receiver, wherein the secondary stream comprises a plurality of self-contained blocks, wherein a distance of the self-contained blocks in the secondary stream is shorter than the distance of the self-contained blocks in the main stream.

12. The method of claim 11, wherein the secondary stream further comprises a plurality of blocks including only partial information for decoding.

13. The method of claim 10, wherein the main stream and the secondary stream are provided via a server to a receiver, wherein in response to the tune-in request the secondary stream is provided from the server to the receiver for decoding, until the self-contained block arrives on the main stream or until the required main stream decoder buffer-fill level is reached.

14. The method of claim 10, further comprising post-processing the decoded main stream to reduce an abruptness of the transition from the low-quality secondary stream to the high-quality main stream.

15. The method of claim 14, wherein post-processing comprises filtering the decoded main stream, wherein a filter coefficient is adapted over a predefined number of blocks to gradually increase the quality, or wherein post-processing comprises starting the decoding of the main stream with a reduced set of decoding coefficients and adjusting the set of decoding coefficients over a predefined number of blocks to gradually increase the quality of the main stream.

16. The method of claim 10, further comprising:
providing an additional secondary stream comprising at least a subset of the data blocks of the main stream encoded at a quality between the quality of encoding the data blocks of the main stream and the secondary stream,
wherein the secondary stream is decoded until a self-contained block arrives on the additional secondary stream, and
wherein the additional secondary stream is decoded until arrival of the self-contained block in the main stream.

17. The method of claim 16, wherein a plurality of additional secondary streams is provided, each additional secondary stream comprising at least a subset of the data blocks of the main stream encoded with a different quality between the quality of encoding the data blocks of the main stream and the secondary stream.

18. The method of claim 10, further comprising:
providing for each self-contained block in the main stream or in the secondary stream a switching block or for each group of blocks in the main stream or the secondary stream a group of switching blocks, a switching block being encoded with a quality between the quality of data blocks of the main stream and the secondary stream.

19. The method of claim 18, wherein the switching blocks or the group of switching blocks are provided together with the main stream or the secondary stream or are provided independent from the main stream and the secondary stream.

20. The method of claim 10, further comprising:
signaling a switching point in the secondary stream or the main stream to a decoder used for decoding the secondary stream and the main stream; and
switching the decoder from a mode for decoding the secondary stream to a mode for decoding the main stream before starting decoding of the main stream.

21. The method of claim 10, wherein the main stream and the secondary stream are associated with a channel of a multi-channel transmission system, wherein the tune-in request indicates a change from a current channel of the multi-channel transmission system to a new channel of the multi-channel transmission system, and wherein the secondary stream is decoded until the self-contained block arrives on the main stream and the required main stream decoder buffer-fill level is reached.

22. The method of claim 10, wherein the main stream and the secondary stream are associated with a stream, wherein the tune-in request initiates an initial tuning into the stream, and wherein the secondary stream is decoded until the self-contained block arrives on the main stream and the required main stream decoder buffer-fill level is reached.

23. The method of claim 10, wherein the main stream and the secondary stream are associated with a stream which is obtained on demand of a user, wherein the tune-in request initiates an initial tuning into the stream, and wherein the secondary stream is decoded until the required main stream decoder buffer-fill level is reached.

24. A decoder for receiving encoded data and providing decoded output data, the decoder comprising:
an input for receiving a main stream and a secondary stream, the main stream comprising a plurality of encoded data blocks, the plurality of encoded data blocks comprises a plurality of self-contained blocks including all information for decoding the block and a plurality of blocks including only partial information for decoding, wherein a distance of self-contained blocks in the stream is varied, dependent on the content encoded in the stream, wherein the secondary stream comprises at least a subset of the data blocks of the main stream encoded at a lower quality than the data blocks of the main stream, and wherein the self-contained blocks are inserted at positions in the main stream where differences in the quality of the data encoded in the main stream and the secondary stream are less detectable;
a control input for receiving a tune-in request signal; and
a decoding portion coupled to the input and to the control input for producing decoded output data, the decoding portion being adapted to tune into the secondary stream upon receiving a tune-in request at the control input, to decode the secondary stream until a self-contained block arrives on the main stream or until a required main stream decoder buffer-fill level is reached, and to stop decoding of the secondary stream and to start decoding of the main stream upon arrival of the self-contained block on the main stream or reaching the required main stream decoder buffer-fill level.

25. A computer readable medium for storing instruction which, when being executed by a computer, carry out a method for generating a stream of data comprising a plurality of encoded data blocks, the plurality of encoded data blocks comprising a plurality of self-contained blocks including all information for decoding the block and a plurality of blocks including only partial information for decoding, wherein a distance of self-contained blocks in the stream is varied, dependent on the content encoded in the stream,
wherein the stream is a main stream, and wherein tuning into the main stream is effected via a secondary stream comprising at least a subset of the data blocks of the main stream encoded at a quality different from a quality of the data blocks of the main stream, and
wherein the self-contained blocks are inserted at positions in the main stream where differences in the quality of the data encoded in the main stream and in the secondary stream are less detectable.

## Patentansprüche

1. Ein Verfahren zum Erzeugen eines Datenstroms, der eine Mehrzahl codierter Datenblöcke aufweist, wobei die Mehrzahl codierter Datenblöcke eine Mehrzahl in sich geschlossener Blöcke, die alle Informationen zum Decodieren des Blocks umfassen, und eine Mehrzahl von Blöcken, die lediglich Teilinformationen zum Decodieren umfassen, aufweisen, wobei das Verfahren folgende Schritte aufweist:
Variieren eines Abstandes in sich geschlossener Blöcke in dem Strom in Abhängigkeit von dem in dem Strom codierten Inhalt,
wobei der Strom ein Hauptstrom (408) ist und wobei ein Einstellen auf den Hauptstrom über einen Nebenstrom bewerkstelligt wird, der zumindest einen Teilsatz der Datenblöcke des Hauptstroms aufweist, die mit einer Qualität codiert sind, die sich von einer Qualität der Datenblöcke des Hauptstroms unterscheidet, und
wobei die in sich geschlossenen Blöcke an Positionen in den Hauptstrom eingefügt werden, wo Unterschiede bezüglich der Qualität der in dem Hauptstrom und in dem Nebenstrom codierten Daten weniger erfassbar sind.

2. Das Verfahren gemäß Anspruch 1, mit folgenden Schritten:
Analysieren des Inhalts des Hauptstroms während des Codierens der Daten für den Hauptstrom; und
auf der Basis der Analyse, Bestimmen einer Position der in sich geschlossenen Blöcke in dem Hauptstrom.

3. Das Verfahren gemäß Anspruch 1, bei dem die in sich geschlossenen Blöcke an einer Position in den Hauptstrom eingefügt werden, wo der Inhalt dynamischer ist als an einer anderen Position.

4. Das Verfahren gemäß Anspruch 3, bei dem die Daten des Hauptstroms Videoinhalt darstellen und bei dem die in sich geschlossenen Blöcke an Szenengrenzen oder während schneller Kamerabewegungen während einer Szene eingefügt werden.

5. Das Verfahren gemäß Anspruch 4, bei dem der Hauptstrom unter Verwendung eines Schemas eines differentiellen Videocodierens codiert wird, was eine Mehrzahl von I- oder IDR-Bildern als in sich geschlossene Blöcke und eine Mehrzahl von P-Bildern oder B-Bildern ergibt.

6. Das Verfahren gemäß Anspruch 4, bei dem der Inhalt unter Verwendung eines Schemas eines skalierbaren Videocodierens codiert wird, was zumindest eine Verbesserungsschicht als Hauptstrom und eine Basisschicht als Nebenstrom ergibt, wobei der I-Bild-Abstand in der Basisschicht kürzer ist als der I-Bild-Abstand in der Verbesserungsschicht.

7. Das Verfahren gemäß Anspruch 1, bei dem der Abstand der in sich geschlossenen Blöcke in dem Strom innerhalb eines vordefinierten Zeitfensters variiert wird.

8. Das Verfahren gemäß Anspruch 1, das ferner folgenden Schritt aufweist:
Erzeugen, für jeden in sich geschlossenen Block in dem Hauptstrom, eines Schaltblocks oder, für jede Gruppe von Blöcken in dem Hauptstrom, eine Gruppe von Schaltblöcken, wobei ein Schaltblock mit einer Qualität codiert wird, die zwischen der Qualität der Datenblöcke des Hauptstroms und des Nebenstroms liegt.

9. Ein Codierer (202) zum Erzeugen eines Datenstroms, der eine Mehrzahl codierter Datenblöcke aufweist, wobei die Mehrzahl codierter Datenblöcke eine Mehrzahl in sich geschlossener Blöcke, die alle Informationen zum Decodieren des Blocks umfassen, und eine Mehrzahl von Blöcken, die lediglich Teilinformationen zum Decodieren umfassen, aufweisen,
wobei der Codierer dazu konfiguriert ist, einen Abstand in sich geschlossener Blöcke in dem Strom in Abhängigkeit von dem in dem Strom codierten Inhalt zu variieren,
wobei der Strom ein Hauptstrom ist und wobei ein Einstellen auf den Hauptstrom über einen Nebenstrom bewerkstelligt wird, der zumindest einen Teilsatz der Datenblöcke des Hauptstroms aufweist, die mit einer Qualität codiert sind, die sich von einer Qualität der Datenblöcke des Hauptstroms unterscheidet, und
wobei die in sich geschlossenen Blöcke an Positionen in den Hauptstrom eingefügt werden, wo Unterschiede bezüglich der Qualität der in dem Hauptstrom und in dem Nebenstrom codierten Daten weniger erfassbar sind.

10. Ein Verfahren zum Einstellen auf einen Hauptstrom, wobei das Verfahren folgende Schritte aufweist:
Bereitstellen eines Hauptstroms, der gemäß dem Verfahren eines der Ansprüche 1 bis 8 erzeugt wurde, und des Nebenstroms;
auf einen Empfang einer Einstellanforderung hin, Einstellen auf den Nebenstrom und den Hauptstrom;
Decodieren des Nebenstroms, bis ein in sich geschlossener Block an dem Hauptstrom ankommt oder bis ein erforderlicher Hauptstromdecodierer-Pufferfüllstand erreicht ist; und
auf das Ankommen des in sich geschlossenen Blocks an dem Hauptstrom hin oder auf das Erreichen des erforderlichen Hauptstromdecodierer-Pufferfüllstandes hin, Anhalten des Decodierens des Nebenstroms und Beginnen des Decodierens des Hauptstroms.

11. Das Verfahren gemäß Anspruch 10, bei dem der Hauptstrom und der Nebenstrom einem Empfänger bereitgestellt werden, wobei der Nebenstrom eine Mehrzahl in sich geschlossener Blöcke aufweist, wobei ein Abstand der in sich geschlossenen Blöcke in dem Nebenstrom kürzer ist als der Abstand der in sich geschlossenen Blöcke in dem Hauptstrom.

12. Das Verfahren gemäß Anspruch 11, bei dem der Nebenstrom ferner eine Mehrzahl von Blöcken aufweist, die lediglich Teilinformationen zum Decodieren umfassen.

13. Das Verfahren gemäß Anspruch 10, bei dem der Hauptstrom und der Nebenstrom über einen Server einem Empfänger bereitgestellt werden, wobei der Nebenstrom ansprechend auf die Einstellanforderung von dem Server dem Empfänger zum Decodieren bereitgestellt wird, bis der in sich geschlossene Block an dem Hauptstrom ankommt oder bis der erforderliche Hauptstromdecodierer-Pufferfüllstand erreicht ist.

14. Das Verfahren gemäß Anspruch 10, das ferner ein Nachverarbeiten des decodierten Hauptstroms aufweist, um eine Abruptheit des Übergangs von dem eine niedrige Qualität aufweisenden Nebenstrom zu dem eine hohe Qualität aufweisenden Hauptstrom zu verringern.

15. Das Verfahren gemäß Anspruch 14, bei dem das Nachverarbeiten ein Filtern des decodierten Hauptstroms aufweist, wobei ein Filterkoeffizient über eine vordefinierte Anzahl von Blöcken hinweg dahin gehend angepasst ist, die Qualität allmählich zu erhöhen, oder bei dem die Nachverarbeitung ein Beginnen des Decodierens des Hauptstroms mit einem verringerten Satz von Decodierungskoeffizienten und ein Anpassen des Satzes von Decodierungskoeffizienten über eine vordefinierte Anzahl von Blöcken hinweg, um die Qualität des Hauptstroms allmählich zu erhöhen, aufweist.

16. Das Verfahren gemäß Anspruch 10, das ferner folgende Schritte aufweist:
Bereitstellen eines zusätzlichen Nebenstroms, der zumindest einen Teilsatz der Datenblöcke des Hauptstroms aufweist, die mit einer Qualität codiert sind, die zwischen der Qualität des Codierens der Datenblöcke des Hauptstroms und des Nebenstroms liegt,
wobei der Nebenstrom decodiert wird, bis ein in sich geschlossener Block an dem zusätzlichen Nebenstrom ankommt, und
wobei der zusätzliche Nebenstrom bis zu dem Ankommen des in sich geschlossenen Blocks in dem Hauptstrom decodiert wird.

17. Das Verfahren gemäß Anspruch 16, bei dem eine Mehrzahl zusätzlicher Nebenströme bereitgestellt wird, wobei jeder zusätzliche Nebenstrom zumindest einen Teilsatz der Datenblöcke des Hauptstroms aufweist, die mit einer anderen Qualität zwischen der Qualität des Codierens der Datenblöcke des Hauptstroms und des Nebenstroms codiert sind.

18. Das Verfahren gemäß Anspruch 10, das ferner folgenden Schritt aufweist:
Bereitstellen, für jeden in sich geschlossenen Block in dem Hauptstrom oder in dem Nebenstrom, eines Schaltblocks oder, für jede Gruppe von Blöcken in dem Hauptstrom oder dem Nebenstrom, eine Gruppe von Schaltblöcken, wobei ein Schaltblock mit einer Qualität codiert wird, die zwischen der Qualität der Datenblöcke des Hauptstroms und des Nebenstroms liegt.

19. Das Verfahren gemäß Anspruch 18, bei dem die Schaltblöcke oder die Gruppe von Schaltblöcken zusammen mit dem Hauptstrom oder dem Nebenstrom vorgesehen werden oder unabhängig von dem Hauptstrom und dem Nebenstrom bereitgestellt werden.

20. Das Verfahren gemäß Anspruch 10, das ferner folgende Schritte aufweist:
Signalisieren eines Schaltpunkts in dem Nebenstrom oder dem Hauptstrom gegenüber einem Decodierer, der zum Decodieren des Nebenstroms und des Hauptstroms verwendet wird; und
Schalten des Decodierers von einem Modus zum Decodieren des Nebenstroms in einen Modus zum Decodieren des Hauptstroms, bevor das Decodieren des Hauptstroms begonnen wird.

21. Das Verfahren gemäß Anspruch 10, bei dem der Hauptstrom und der Nebenstrom einem Kanal eines Mehrkanalübertragungssystems zugeordnet sind, bei dem die Einstellanforderung eine Veränderung von einem aktuellen Kanal des Mehrkanalübertragungssystems zu einem neuen Kanal des Mehrkanalübertragungssystems angibt und bei dem der Nebenstrom decodiert wird, bis der in sich geschlossene Block an dem Hauptstrom ankommt und der erforderliche Hauptstromdecodierer-Pufferfüllstand erreicht ist.

22. Das Verfahren gemäß Anspruch 10, bei dem der Hauptstrom und der Nebenstrom einem Strom zugeordnet sind, bei dem die Einstellanforderung ein anfängliches Einstellen auf den Strom einleitet und bei dem der Nebenstrom decodiert wird, bis der in sich geschlossene Block an dem Hauptstrom ankommt und der erforderliche Hauptstromdecodierer-Pufferfüllstand erreicht ist.

23. Das Verfahren gemäß Anspruch 10, bei dem der Hauptstrom und der Nebenstrom einem Strom zugeordnet sind, der auf Verlangen eines Nutzers erhalten wird, bei dem die Einstellanforderung ein anfängliches Einstellen auf den Strom einleitet und bei dem der Nebenstrom decodiert wird, bis der erforderliche Hauptstromdecodierer-Pufferfüllstand erreicht ist.

24. Ein Decodierer zum Empfangen codierter Daten und zum Bereitstellen decodierter Ausgangsdaten, wobei der Decodierer folgende Merkmale aufweist:
einen Eingang zum Empfangen eines Hauptstrom und eines Nebenstroms, wobei der Hauptstrom eine Mehrzahl codierter Datenblöcke aufweist, wobei die Mehrzahl codierter Datenblöcke eine Mehrzahl in sich geschlossener Blöcke, die alle Informationen zum Decodieren des Blocks umfassen, und eine Mehrzahl von Blöcken, die lediglich Teilinformationen zum Decodieren umfassen, aufweisen, wobei ein Abstand in sich geschlossener Blöcke in dem Strom in Abhängigkeit von dem in dem Strom codierten Inhalt variiert wird, wobei der Nebenstrom zumindest einen Teilsatz der Datenblöcke des Hauptstroms aufweist, die mit einer geringeren Qualität codiert sind als die Datenblöcke des Hauptstroms, und wobei die in sich geschlossenen Blöcke an Positionen in den Hauptstrom eingefügt werden, wo Unterschiede bezüglich der Qualität der in dem Hauptstrom und dem Nebenstrom codierten Daten weniger erfassbar sind;
einen Steuereingang zum Empfangen eines Einstellanforderungssignals; und
einen mit dem Eingang und mit dem Steuereingang gekoppelten Decodierungsabschnitt zum Erzeugen decodierter Ausgangsdaten, wobei der Decodierungsabschnitt dazu angepasst ist, sich auf ein Empfangen einer Einstellanforderung an dem Steuereingang hin auf den Nebenstrom einzustellen, den Nebenstrom zu decodieren, bis ein sich geschlossener Block an dem Hauptstrom ankommt oder bis ein erforderlicher Hauptstromdecodierer-Pufferfüllstand erreicht ist, und das Decodieren des Nebenstroms zu beenden und bei einem Ankommen des in sich geschlossenen Blocks an dem Hauptstrom oder bei einem Erreichen des erforderlichen Hauptstromdecodierer-Pufferfüllstandes das Decodieren des Hauptstroms zu beginnen.

25. Ein computerlesbares Medium zum Speichern von Anweisungen, die, wenn sie durch einen Computer ausgeführt werden, ein Verfahren zum Erzeugen eines Datenstroms durchführen, der eine Mehrzahl codierter Datenblöcke aufweist, wobei die Mehrzahl codierter Datenblöcke eine Mehrzahl in sich geschlossener Blöcke, die alle Informationen zum Decodieren des Blocks umfassen, und eine Mehrzahl von Blöcken, die lediglich Teilinformationen zum Decodieren umfassen, aufweisen, wobei ein Abstand in sich geschlossener Blöcke in dem Strom in Abhängigkeit von dem in dem Strom enthaltenen Inhalt variiert wird,
wobei der Strom ein Hauptstrom ist und wobei ein Einstellen auf den Hauptstrom über einen Nebenstrom bewerkstelligt wird, der zumindest einen Teilsatz der Datenblöcke des Hauptstroms aufweist, die mit einer Qualität codiert sind, die sich von einer Qualität der Datenblöcke des Hauptstroms unterscheidet, und
wobei die in sich geschlossenen Blöcke an Positionen in den Hauptstrom eingefügt werden, wo Unterschiede bezüglich der Qualität der in dem Hauptstrom und in dem Nebenstrom codierten Daten weniger erfassbar sind.

## Revendications

1. Procédé de génération d'un flux de données comprenant une pluralité de blocs de données codés, la pluralité de blocs de données codés comprenant une pluralité de blocs autonomes comprenant toutes les informations pour décoder le bloc et une pluralité de blocs ne comportant que des informations partielles pour le décodage, le procédé comprenant le fait de:
faire varier une distance de blocs autonomes dans le flux en fonction du contenu codé dans le flux,
dans lequel le flux est un flux principal (408) et dans lequel le réglage sur le flux principal s'effectue par un flux secondaire comprenant au moins un sous-ensemble des blocs de données du flux principal codés à une qualité différente d'une qualité des blocs de données du flux principal, et
dans lequel les blocs autonomes sont insérés à des positions dans le flux principal où des différences en qualité des données codées dans le flux principal et dans le flux secondaire sont moins détectables.

2. Procédé selon la revendication 1, comprenant le fait de
analyser le contenu du flux principal pendant le codage des données pour le flux principal; et
sur base de l'analyse, déterminer une position des blocs autonomes dans le flux principal.

3. Procédé selon la revendication 1, dans lequel les blocs autonomes sont insérés à une position dans le flux principal où le contenu est plus dynamique qu'à une autre position.

4. Procédé selon la revendication 3, dans lequel les données du flux principal représentent le contenu vidéo, et dans lequel les blocs autonomes sont insérés au niveau des limites de scène ou pendant des mouvements de caméra rapides au cours d'une scène.

5. Procédé selon la revendication 4, dans lequel le flux principal est codé à l'aide d'un schéma de codage vidéo différentiel produisant une pluralité d'images I ou IDR comme blocs autonomes et une pluralité d'images P ou d'images B.

6. Procédé selon la revendication 4, dans lequel le contenu est codé à l'aide d'un schéma de codage vidéo échelonnable qui donne au moins une couche d'amélioration comme flux principal et une couche de base comme flux secondaire, la distance entre images I dans la couche de base étant plus courte que la distance entre images I dans la couche d'amélioration.

7. Procédé selon la revendication 1, dans lequel la distance entre les blocs autonomes dans le flux varie dans une fenêtre de temps prédéfinie.

8. Procédé selon la revendication 1, comprenant par ailleurs le fait de:
générer, pour chaque bloc autonome dans le flux principal, un bloc de commutation ou, pour chaque groupe de blocs dans le flux principal, un groupe de blocs de commutation, un bloc de commutation étant codé à une qualité entre la qualité des blocs de données du flux principal et du flux secondaire.

9. Codeur (202) pour générer un flux de données comprenant une pluralité de blocs de données codés, la pluralité de blocs de données codés comprenant une pluralité de blocs autonomes comportant toutes les informations pour décoder le bloc et une pluralité de blocs comportant uniquement des informations partielles pour le décodage,
dans lequel le codeur est configuré pour faire varier une distance de blocs autonomes dans le flux en fonction du contenu codé dans le flux,
dans lequel le flux est un flux principal, et dans lequel le fait de régler sur le flux principal s'effectue par l'intermédiaire d'un flux secondaire comprenant au moins un sous-ensemble des blocs de données du flux principal codés à une qualité différente d'une qualité des blocs de données du flux principal, et
dans lequel les blocs autonomes sont insérés à des positions dans le flux principal où des différences en qualité des données codées dans le flux principal et dans le flux secondaire sont moins détectables.

10. Procédé pour régler sur un flux principal, le procédé comprenant le fait de:
fournir un flux principal généré selon le procédé de l'une des revendications 1 à 8, et le flux secondaire;
à la réception d'une demande de réglage, régler sur le flux secondaire et le flux principal;
décoder le flux secondaire jusqu'à ce qu'un bloc autonome arrive sur le flux principal ou jusqu'à ce que soit atteint un niveau de remplissage de tampon de décodeur de flux principal requis; et
à l'arrivée du bloc autonome sur le flux principal ou lorsque le niveau de remplissage de tampon de décodeur de flux principal requis est atteint, arrêter de décoder le flux secondaire et commencer à décoder le flux principal.

11. Procédé selon la revendication 10, dans lequel le flux principal et le flux secondaire sont fournis à un récepteur, dans lequel le flux secondaire comprend une pluralité de blocs autonomes, dans lequel une distance entre les blocs autonomes dans le flux secondaire est plus courte que la distance entre les blocs autonomes dans le flux principal.

12. Procédé selon la revendication 11, dans lequel le flux secondaire comprend par ailleurs une pluralité de blocs ne comportant que des informations partielles pour le décodage.

13. Procédé selon la revendication 10, dans lequel le flux principal et le flux secondaire sont fournis à travers un serveur à un récepteur, dans lequel, en réponse à la demande de réglage, le flux secondaire est fourni du serveur au récepteur pour décodage, jusqu'à ce que le bloc autonome arrive sur le flux principal ou jusqu'à ce que soit atteint le niveau de remplissage de tampon de décodeur de flux principal requis.

14. Procédé selon la revendication 10, comprenant par ailleurs le fait de post-traiter le flux principal décodé, pour réduire un caractère brusque de la transition du flux secondaire de basse qualité au flux principal de haute qualité.

15. Procédé selon la revendication 14, dans lequel le post-traitement comprend le fait de filtrer le flux principal décodé, dans lequel un coefficient de filtration est adapté sur un nombre prédéfini de blocs, pour augmenter progressivement la qualité, ou dans lequel le post-traitement comprend le fait de commencer le décodage du flux principal par un ensemble réduit de coefficients de décodage et d'adapter l'ensemble de coefficients de décodage sur un nombre prédéfini de blocs, pour augmenter progressivement la qualité du flux principal.

16. Procédé selon la revendication 10, comprenant par ailleurs le fait de:
prévoir un flux secondaire additionnel comprenant au moins un sous-ensemble de blocs de données du flux principal codés à une qualité entre la qualité de codage des blocs de données du flux principal et celle du flux secondaire,
dans lequel le flux secondaire est décodé jusqu'à ce qu'un bloc autonome arrive sur le flux secondaire additionnel, et
dans lequel le flux secondaire additionnel est décodé jusqu'à l'arrivée du bloc autonome dans le flux principal.

17. Procédé selon la revendication 16, dans lequel sont prévus une pluralité de flux secondaires additionnels, chaque flux secondaire additionnel comprenant au moins un sous-ensemble de blocs de données du flux principal codés à une qualité différente entre la qualité de codage des blocs de données du flux principal et celle du flux secondaire.

18. Procédé selon la revendication 10, comprenant par ailleurs le fait de:
prévoir, pour chaque bloc autonome dans le flux principal ou dans le flux secondaire, un bloc de commutation, ou pour chaque groupe de blocs dans le flux principal ou le flux secondaire, un groupe de blocs de commutation, un bloc de commutation étant codé à une qualité entre la qualité des blocs de données du flux principal et du flux secondaire.

19. Procédé selon la revendication 18, dans lequel les blocs de commutation ou le groupe de blocs de commutation sont prévus ensemble avec le flux principal ou le flux secondaire ou sont prévus indépendamment du flux principal et du flux secondaire.

20. Procédé selon la revendication 10, comprenant par ailleurs le fait de:
signaler un point de commutation dans le flux secondaire ou le flux principal à un décodeur utilisé pour décoder le flux secondaire et le flux principal; et
commuter le décodeur d'un mode pour décoder le flux secondaire à un mode pour décoder le flux principal avant de commencer le décodage du flux principal.

21. Procédé selon la revendication 10, dans lequel le flux principal et le flux secondaire sont associés à un canal d'un système de transmission multicanal, dans lequel la demande de réglage indique un changement d'un canal actuel du système de transmission multicanal à un nouveau canal du système de transmission multicanal, et dans lequel le flux secondaire est décodé jusqu'à ce que le bloc autonome arrive sur le flux principal et que le niveau de remplissage de tampon de décodeur de flux principal requis soit atteint.

22. Procédé selon la revendication 10, dans lequel le flux principal et le flux secondaire sont associés à un flux, dans lequel la demande de réglage initie un réglage initial sur le flux, et dans lequel le flux secondaire est décodé jusqu'à ce que le bloc autonome arrive sur le flux principal et que le niveau de remplissage de tampon de décodeur de flux principal requis soit atteint.

23. Procédé selon la revendication 10, dans lequel le flux principal et le flux secondaire sont associés à un flux qui est obtenu à la demande d'un utilisateur, dans lequel la demande de réglage initie un réglage initial sur le flux, et dans lequel le flux secondaire est décodé jusqu'à ce que soit atteint le niveau de remplissage de tampon de décodeur de flux principal requis.

24. Décodeur pour recevoir des données codées et fournir des données de sortie décodées, le décodeur comprenant:
une entrée pour recevoir un flux principal et un flux secondaire, le flux principal comprenant une pluralité de blocs de données codés, la pluralité de blocs de données codés comprenant une pluralité de blocs autonomes comportant toutes les informations pour décoder le bloc et une pluralité de blocs ne comportant que des informations partielles pour le décodage, dans lequel une distance entre des blocs autonomes dans le flux est variée en fonction du contenu codé dans le flux, dans lequel le flux secondaire comprend au moins un sous-ensemble des blocs de données du flux principal codés à une qualité inférieure à celle des blocs de données du flux principal, et dans lequel les blocs autonomes sont insérés à des positions dans le flux principal où des différences en qualité des données codées dans le flux principal et le flux secondaire sont moins détectables;
une entrée de commande destinée à recevoir un signal de demande de réglage; et
une partie de décodage couplée à l'entrée et à l'entrée de commande pour produire des données de sortie décodées, la partie de décodage étant adaptée pour régler sur le flux secondaire à la réception d'une demande de réglage à l'entrée de commande, pour décoder le flux secondaire jusqu'à ce qu'un bloc autonome arrive sur le flux principal ou jusqu'à ce que soit atteint un niveau de remplissage de tampon de décodeur de flux principal requis, et pour arrêter le décodage du flux secondaire et pour commencer le décodage du flux principal à l'arrivée du bloc autonome sur le flux principal ou lorsque le niveau de remplissage de tampon de décodeur de flux principal requis est atteint.

25. Support lisible par ordinateur pour mémoriser des instructions qui, lorsqu'elles sont exécutées par un ordinateur, réalisent un procédé de génération d'un flux de données comprenant une pluralité de blocs de données codés, la pluralité de blocs de données codés comprenant une pluralité de blocs autonomes comportant toutes les informations pour décoder le bloc et une pluralité de blocs ne comportant que des informations partielles pour le décodage, dans lequel une distance entre les blocs autonomes dans le flux est varié en fonction du contenu codé dans le flux,
dans lequel le flux est un flux principal, et dans lequel le réglage sur le flux principal s'effectue par l'intermédiaire d'un flux secondaire comprenant au moins un sous-ensemble des blocs de données du flux principal codés à une qualité différente d'une qualité des blocs de données du flux principal, et
dans lequel les blocs autonomes sont insérés à des positions dans le flux principal où des différences en qualité des données codées dans le flux principal et le flux secondaire sont moins détectables.
